# EUROPÄISCHE PATENTSCHRIFT

(11) **EP 2 295 831 B1**
(45) Veröffentlichungstag und Bekanntmachung des Hinweises auf die Patenterteilung: **01.04.2020**
(21) Anmeldenummer: 10010500.6
(22) Anmeldetag: 17.04.2009
(51) Int. Cl.: F16H 1/28, F16H 3/72, F16H 37/08

(54) **Differentialgetriebe**
Differential
Différentiel

(30) Priorität: 25.04.2008 CZ 20080258
(43) Veröffentlichungstag der Anmeldung: 16.03.2011
(62) Teilanmeldung aus: 09735460.9
(73) Patentinhaber: SEW-EURODRIVE GmbH & Co. KG, 76646 Bruchsal (DE)
(72) Erfinder: Dolejs, Jiri, 330 13 Trnová 275 (CZ); Penkava, Josef, 301 00 Plzen (CZ)

(56) Entgegenhaltungen:
- EP-A2- 1 482 210
- WO-A1-99/06738
- DE-A1- 3 640 146
- GB-A- 1 305 393
- US-A1- 2007 149 348

## Beschreibung

Die Erfindung betrifft eine Getriebe und eine Differentialgetriebeeinrichtung. Dabei umfasst letztere einen Ausgleichsmechanismus mit dem Planetenräderwerk in Verbindung mit den Getriebestufen in den langsam laufenden Leistungsantrieben der Maschineneinrichtungen mit der Möglichkeit der Installation in den Betrieben verschiedener Industriezweige.

Es ist bekannt, bei industriellen Antrieben, Leistungsgetriebe mit Satellitengetriebestufen einzusetzen, die aber mit konstanter Übersetzung benutzt werden. Unter solchen Leistungsgetrieben werden Getriebe für Antriebe mit mehr als 100kW oder gar mehr als 1MW verstanden.

**Aus der** WO 99/06738 A1 **ist ein elektromechanisches Übersetzungsgetriebe bekannt, das eine Differentialgetriebeeinrichtung nach dem Oberbegriff des Anspruch 1 umfasst.**

**Aus der** DE 36 40 146 A1 **ist ein Überlagerungssystem zur Erzeugung einstellbarer Drehzahlen bekannt.**

**Aus der** GB 1 305 393 A **ist ein Getriebe bekannt.**

**Aus der** US 2007/149348 A1 **ist ein Fahrzeugantriebssystem bekannt.**

Aus der EP 1 482 210 A2 ist ein Getriebe mit frei schwimmendem Sonnenrad bekannt.

Der Erfindung liegt die Aufgabe zugrunde, Getriebe in kostengünstiger Weise weiterzubilden, insbesondere die Sicherheit in Anlagen zu erhöhen.

Die Aufgabe wird gelöst durch das Getriebe nach den in Anspruch 1 angegebenen Merkmalen.

Wichtige Merkmale bei dem Getriebe sind, dass es eine Überlagerungsgetriebeeinrichtung umfasst, insbesondere eine Differentialgetriebeeinrichtung,
wobei über zwei eintreibende Wellen des Getriebes Drehmomentflüsse mittels der Überlagerungsgetriebeeinrichtung zusammenführbar sind,
wobei eine erste der eintreibenden Wellen ein Zentralrad, insbesondere Sonne, eines Planetenräderwerks antreibt,
**wobei** die erste eintreibende Welle frei gelagert ist, indem sie
- in einem ersten axialen Bereich an Umlaufrädern der Überlagerungsgetriebeeinrichtung gelagert ist
- und in einem zweiten axialen Bereich über eine Wellenkupplung an einer eintreibenden Vorrichtung gelagert ist, insbesondere an einer Abtriebswelle eines Motors, insbesondere Elektromotors.

Von Vorteil ist dabei, dass ein Ausgleichsmechanismus geschaffen ist, durch welchen toleranzbedingte oder fehlstellungsbedingte Kräfte ableitbar sind. Insbesondere ist ein Antreiben des Getriebes durch einen Hauptantrieb und einen Zusatzantrieb ermöglicht, wodurch die Sicherheit bei Ausfall eines der Antriebe erhöht ist. Die von den Antrieben erzeugten Leistungsflüsse sind mittels des Überlagerungsgetriebes zusammenführbar auf nachfolgende Stirnradstufen. Somit ist eintriebseitig ein Differentialgetriebemechanismus mit Ausgleichsmechanismus anordenbar und dabei variable hohe Übersetzungen sind erreichbar.

Weiterer Vorteil ist bei der Erfindung, dass eine gleichmäßige Gabelung der Leistung an die einzelnen Umlaufräder, also Planeten oder Satelliten, erreichbar ist.

Bei weiteren erfindungsgemäßen Ausgestaltungen ist die zumindest eine abtreibende Welle der Überlagerungsgetriebeeinrichtung eintreibende Welle eines ein- oder mehrstufigen Parallelwellengetriebes, insbesondere Stirnradgetriebes, insbesondere wobei die Überlagerungsgetriebeeinrichtung und das Parallelwellengetriebe als jeweils verschiedene Getriebestufen in einem diese Getriebestufen umfassenden Getriebe angeordnet sind. Von Vorteil ist dabei, dass mittels des nachfolgenden Stirnradgetriebes sehr hohe Drehmoments am Abtrieb des Getriebes zur Verfügung stellbar sind.

Bei weiteren erfindungsgemäßen Ausgestaltungen sind die Planeten als Stufenplaneten ausgeführt, wobei das Zentralrad mit der ersten Verzahnungsstufe der Stufenplaneten und ein weiteres, abtriebseitigeres Teil mit der zweiten Verzahnungsstufe der Stufenplaneten im Eingriff ist. Von Vorteil ist dabei, dass ein weiterer Bereich von Übersetzungen erreichbar ist.

Bei weiteren erfindungsgemäßen Ausgestaltungen ist das Zentralrad im ersten axialen Bereich der ersten eintreibenden Welle angeordnet und ist dort drehfest mit dieser verbunden oder einstückig ausgeführt. Von Vorteil ist dabei, dass die Welle über das Zentralrad lagerbar ist, also die Lagerung des Zentralrades über die Planeten ausführbar ist und somit eine erste Lagerstelle für die Welle vorsehbar ist. Dabei wird die dortige Position der Welle von den Planeten und deren Lage und Toleranzen bestimmt.

Bei weiteren erfindungsgemäßen Ausgestaltungen weist die erste eintreibende Welle im Bereich der Wellenkupplung eine Außenverzahnung auf, die in eine Innenverzahnung der Welle der eintreibenden Vorrichtung eingreift, insbesondere wobei die Innenverzahnung ballig ausgeführt ist. Von Vorteil ist dabei, dass die Welle eine zweite Lagerstelle mittels der Wellenkupplung erfährt. Somit sind Toleranzen ausgleichbar und ausgleichsbedingte Belastungen der Welle werden reduziert.

Bei weiteren erfindungsgemäßen Ausgestaltungen treibt die zweite eintreibende Welle den Planetenträger an, an dem die mit dem Zentralrad und dem Hohlrad im Eingriff stehenden Planeten gelagert sind. Von Vorteil ist dabei, dass mittels des Planetengetriebes die Leistungen der beiden Antriebe zusammenführbar sind. Dabei wird der Leistungsfluss des ersten Antriebs dem Zentralrad und der Leistungsfluss des zweiten Antriebs dem Planetenträger zugeführt, so dass dann abtriebseitig am Hohlrad der Leistungsfluss entnehmbar ist.

Bei weiteren alternativen erfindungsgemäßen Ausgestaltungen treibt die zweite eintreibende Welle das Hohlrad über eine Kupplung an, mit dem die auch mit dem Zentralrad in Eingriff stehenden Planeten im Eingriff stehen. Von Vorteil ist dabei, dass der Abtrieb des Überlagerungsgetriebe am Planetenträger zur Verfügung steht und somit andere Übersetzungen erreichbar sind.

Bei weiteren erfindungsgemäßen Ausgestaltungen trägt die zweite eintreibende Welle eine Verzahnung, welche eine am Hohlrad vorgesehene Außenverzahnung antreibt, wobei die auch mit dem Zentralrad in Eingriff stehenden Planeten mit der Innenverzahnung des Hohlrades im Eingriff stehen. Von Vorteil ist dabei, dass das Antrieben des Hohlrades über eine weitere Stirnradstufe bewirkt wird, wobei das angetriebene Rad das Hohlrad ist. Somit wird die sogar schon das eintriebseitige Antreiben des Hohlrades mit einer Übersetzung ausgeführt, wodurch ein Motor mit kleinerem Drehmoment verwendbar wird. Der Abtrieb des Überlagerungsgetriebes ist somit wiederum am Planetenträger bereit gestellt.

Bei weiteren erfindungsgemäßen Ausgestaltungen ist an einer der eintreibenden Wellen ein Stirnrad drehbar gelagert ist, das von einer Stirnradstufe umfasst ist, welcher Leistungsfluss vom Überlagerungsgetriebe zuführbar ist. Vorteiligerweise ist somit der Bauraum sehr gut ausnutzbar. Denn eine nachfolgende Stirnradstufe darf nun auch ein Zahnrad umfassen, welches an der eintreibenden Welle des vorgeschalteten Differentialgetriebes gelagert ist. Der Leistungsfluss oder Drehmomentfluss wird sozusagen in einer Schleife durch das Getriebe leitbar und es werden zusätzliche Teile vermieden. Insbesondere ist dies vorteilhaft bei einer abtriebsseitigen Aufteilung oder Gabelung der Leistungsflüsse.

Bei der Differentialgetriebeanordnung werden vorteiligerweise mindestens drei Getriebestufen verwendet. Wesentlich ist dabei, dass eine Planetengetriebestufe umfasst ist, die aus einem, maximal zwei Getriebeplanetenstufen besteht, die an die Eingangswelle des Motors und die Antriebswelle angeschlossen sind. Eine Getriebeplanetenstufe bildet das Planetengetriebe mit den einfachen Satelliten und zwei Getriebeplanetenstufen bilden des Planetengetriebe mit den doppelten Satelliten, und zwar in der Ausführung epi - hypo oder epi - epi.
Jede folgende Getriebeplanetenstufe in einem oder zwei Getriebezweigen wird durch das Stirngetriebe der Zahnräder gebildet, die auf den Zahnradvorgelegen befestigt sind.
Die Grundelemente des Planetenräderwerks mit den einfachen Satelliten sind das Zentralrad, die Satellitenschelle und das Kronenrad mit der Innenverzahnung. Mit dem Zentralrad und dem Kronenrad stehen im Eingriff drei Zwischensatelliten mit gleichem Durchmesser aus den Stirnzahnrädern.
Die Grundelemente des Planetenräderwerks mit den doppelten Satelliten sind das Zentralrad, die Satellitenschelle und das zweite Zentralrad. Drei Satelliten, wieder drei an der Zahl, bestehen aus den Stirnzahnrädern mit größerem und kleinerem Durchmesser, mit der Ausführung epi - hypo mit dem zweiten Zentralrad in der Form des Kronenrads mit der Innenverzahnung, und bei der Ausführung epi - epi mit dem zweiten Zentralrad mit der Außenverzahnung.

Vor einem der Antriebselemente des Planetenräderwerks oder vor einem der Antriebselemente des Zusatzantriebs kann man die Vorstufe aus den Stirnzahnrädern eingliedern.
Sämtliche angeführte Stirnzahnräder sind mit der einfachen Winkelverzahnung ausgeführt.

Bei gleichzeitigem Antrieb durch den Antriebsmotor M₂ und den Antriebsmotor M₃ des Zusatzantriebes mit stufenlos verstellbaren Umdrehungen und Eingangsleistung wird an der angetriebenen Ausgangswelle stufenlose Veränderung der Umdrehungen und der Leistung und der stufenlos veränderbaren Übersetzung in großem Umgang erreicht.
Der Ausgleichsmechanismus setzt sich einerseits zusammen aus der freien Lagerung des Zentralrads, ohne Lager, mit der Antriebswelle zwischen den Satelliten, die axial auf der Stirnfläche der Eingangswelle gestützt ist, und andererseits aus der Wellenlagerung der Satellitenschelle, der Kronenradwelle, des Treibrads der Zusatzantriebswelle und aus den Wellen der Zahnradvorgelegen in den doppelreihigen Kipptonnenlagern mit axialem Betriebsspiel.

Mit der Erfindung ist als ein Differentialgetriebe verwendbar, dessen Übersetzung veränderbar ist und trotzdem eine Durchleitung hoher Leistungen ermöglicht ist. Das erfindungsgemäße Differentialgetriebe ist konstruktionsmäßig mit dem Planetengetriebe, umfassend Stirnzahnräder, und mit Ankoppelung an weitere Getriebestufen konzipiert. Somit erreicht die erfindungsgemäße Konstruktionslösung hohe veränderbare Werte an Übersetzung.
Es ist also für die Übertragung hoher Leistungen ein Differentialgetriebe in industriellen Antrieben einsetzbar, wobei hohe Werte an Übersetzung ausführbar sind und diese als frontale Getriebestufen einsetzbar sind, also als eingangsseitige Getriebestufen. Besonders vorteilhaft ist bei der Erfindung der beschriebene Ausgleichsmechanismus und die Gabelung in die Getriebezweige.

Die Erfindung wird nun anhand der Abbildungen näher erläutert:
Dabei werden
- Stufenplaneten auch als doppelte Satelliten,
- Planetenräder als Umlaufräder, Planeten oder Satelliten,
- ein Hohlrad, also innenverzahntes Zahnrad, auch als Kronenrad und
- ein Planetenträger auch als Satellitenschelle
bezeichnet.

Die Differentialgetriebeeinrichtung mit dem Ausgleichsmechanismus gemäß der Erfindung für hohe zu übertragende Leistungen ist in der Grundrissansicht der Differentialgetriebeeinrichtung mit dem geöffneten Deckel des Getriebes in Form nicht einschränkender Beispiele der Ausführung dargestellt.

In der Fig. 1, 4 bis 9 sind die Antriebsschemen der Baugruppe angeführt.
Die Wellen der Zahnräder mit der einfachen Winkelverzahnung und die Gleitlager sind dabei nur schematisch dargestellt.
Die Fig. 1 bis 4, 10, 11, 12 stellen die Differentialgetriebeeinrichtung mit dem Planetenräderwerk mit den einfachen Satelliten, Fig. 2 in einer ersten Lösung, Fig. 3 in einer anderen Ausführung, dar.

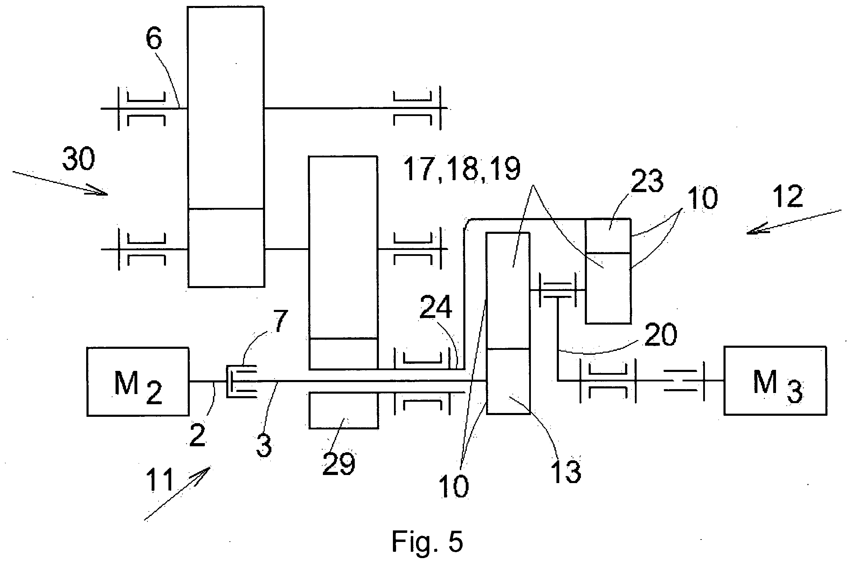

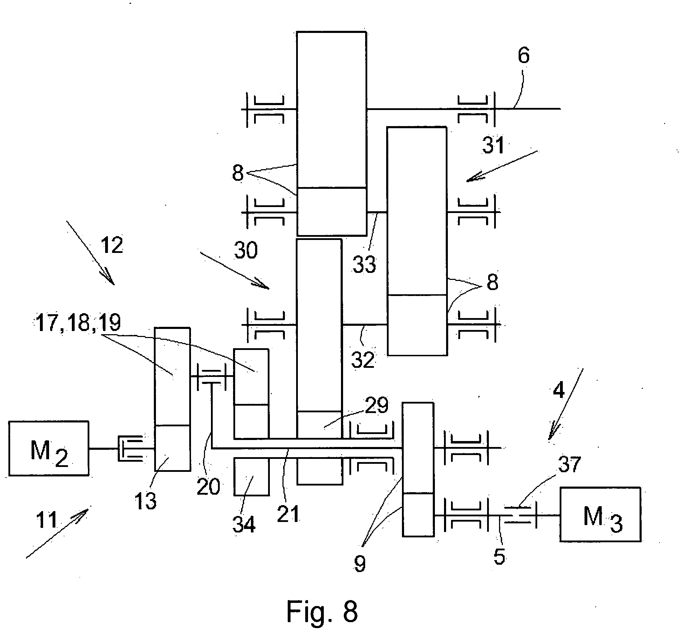

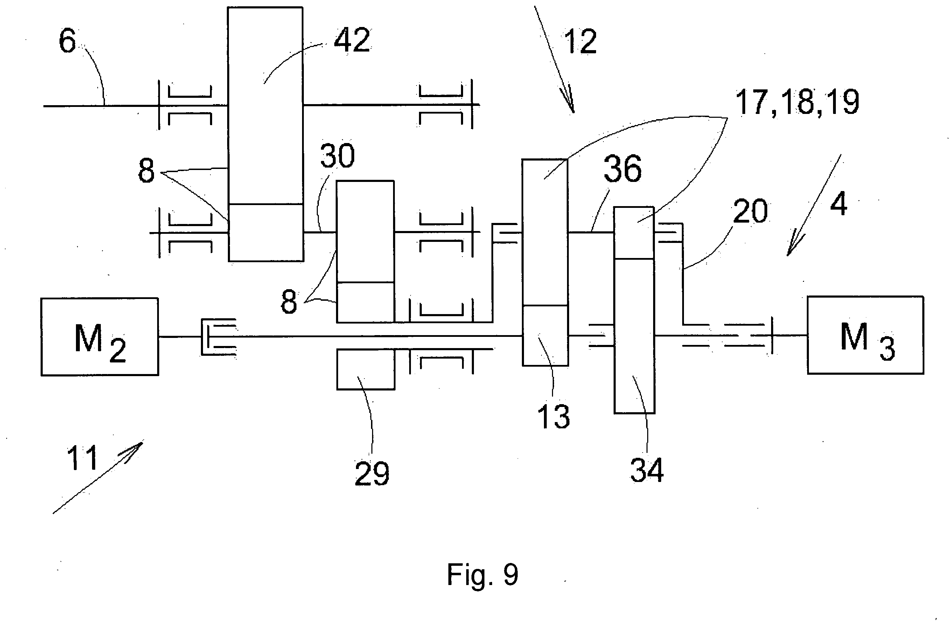

Die Fig. 5, 6 und 7 stellen die Differentialgetriebeeinrichtung mit dem Planetenräderwerk mit den doppelten Satelliten in der Ausführung epi - hypo und die Fig. 8 und 9 mit den doppelten Satelliten in der Ausführung epi - epi dar.

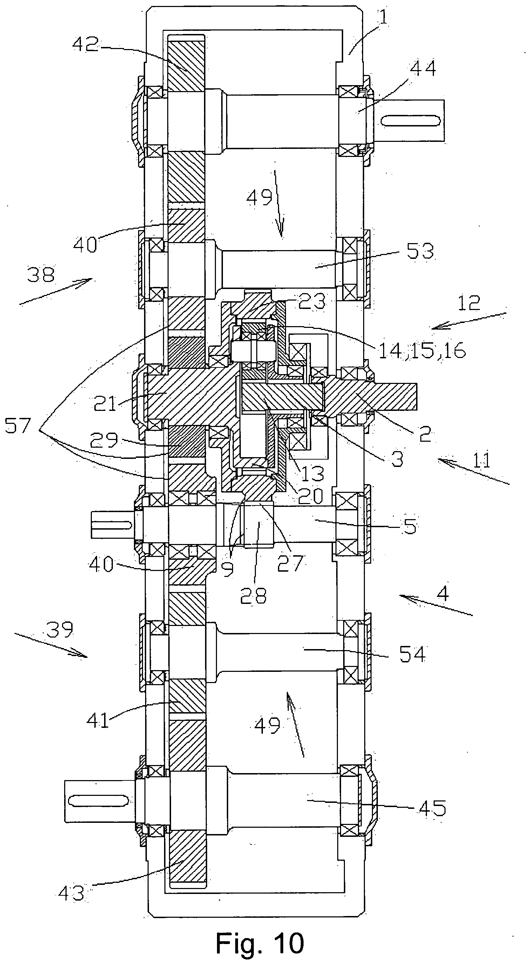

Die Fig. 10, 11 und 12 zeigen die Differentialgetriebeeinrichtung mit der Gabelung in zwei Getriebezweige 38, 39 gemäß der ersten Ausführung.

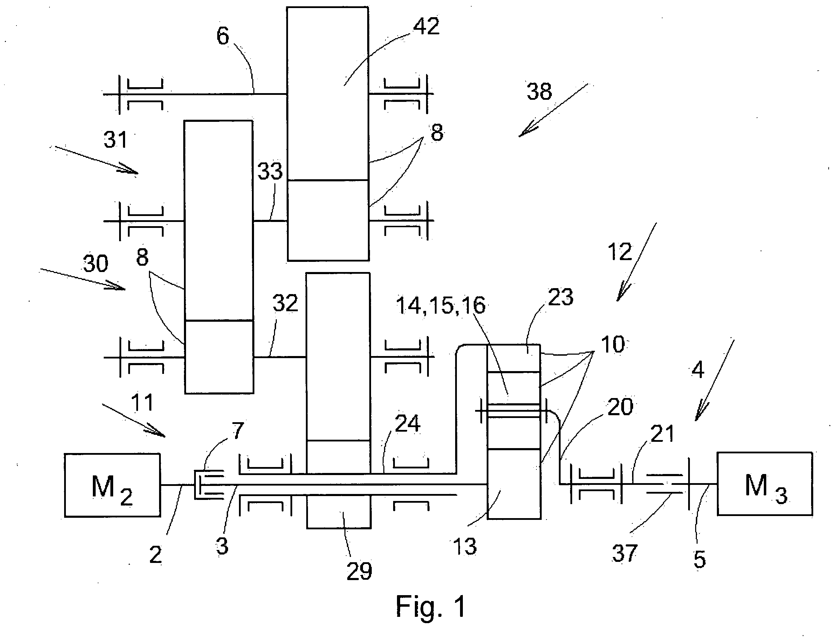

In der Fig. 1 ist kinematisch die Leistungs-Differentialgetriebeeinrichtung mit dem Ausgleichsmechanismus 11 mit seinem Hauptteil - dem Planetenräderwerk 12, das mit einer Planetenstufe 10 konzipiert ist, und zwar das Planetenräderwerk 12 mit den einfachen Satelliten 14, 15, 16, dargestellt. Die ganze Baugruppe ist als vierstufige Kombination ausgeführt.

An die Eingangswelle 2 des Motors M₂ ist das Planetenräderwerk 12 mittels der Antriebswelle 3 angeschlossen, wobei die Verbindung wird weiter unten beschrieben bei der Beschreibung des Ausgleichsmechanismus.

Dieses Planetenräderwerk ist mit den einfachen Satelliten 14, 15, 16 zusammengesetzt, die mit dem Zentralrad 13 mit der Außenverzahnung und dem Kronenrad 23 mit der Innenverzahnung in ständigem Eingriff sind. Auf der Welle 24 des Kronenrads 23 ist das Antriebsrad 29 befestigt. Folgende Getriebestufen 8, durchgeführt in einem Getriebezweig 38, sind durch die Stirngetriebe der Zahnräder gebildet, die auf den Zahnradvorgelegen 30, 31 und der Ausgangswelle 6 befestigt sind.

Das Planetenräderwerk 12 ist durch die Grundteile, das gleichzeitig rotierende Zentralrad 13, die Satellitenschelle 20, also Planetenträger, und das Kronenrad 23, also Hohlrad, gebildet. Der Antriebsteil des Planetenräderwerks 12 ist das Zentralrad 13 mit dem Antriebsmotor M₂.

Diese Ausführung zeigt den prinzipiellen Grundgedanken der Erfindung und sie ist bei allen in den Abbildungen weiter angeführten Konzeptionen angewendet.

Der zweite Antriebsteil ist die Satellitenschelle 20 mit der Ausgangswelle 21 der Satellitenschelle 20, die den Zusatzantrieb 4 mit dem Motor M₃, angeschlossen mittels der Kupplung 37, bildet.

Der angetriebene Teil des Planetenräderwerks 12 ist das Kronenrad 23 mit der Welle 24 des Kronenrads 23, auf dem das Antriebsrad 29 befestigt ist. Über die Stirngetriebestufen 8 der Zahnradvorgelege 30, 31, in einem Getriebezweig 38, wird der Leistungsfluss an die angetriebene Ausgangswelle 6 mit dem letzten angetriebenen Rad 42 übertragen.

Alle Stirnantriebsräder der Planetenstufe 10 und Getriebestufen 8 sind mit einer Schrägverzahnung bei ihrem ständigen Eingriff ausgestattet.

Bei den beiden Antriebsmotoren M₂, M₃ sind die Umdrehungen und die Eingangsleistung stufenlos veränderbar, und dadurch werden an der angetriebene Ausgangswelle 6 die stufenlos veränderbaren Sollumdrehungen und Leistung bei gleichzeitiger stufenlos veränderbaren Größe der Übersetzung erreicht.

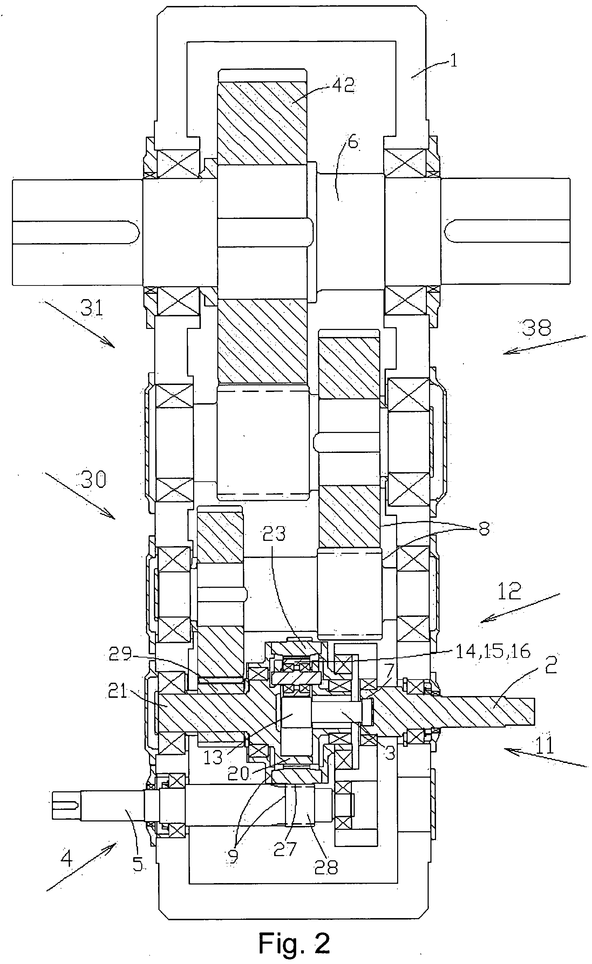

Einen bedeutsamen Beitrag für die Differentialgetriebeeinrichtung stellt der Ausgleichsmechanismus 11 dar, der aus folgenden Bauteilen gebildet ist. Die Eingangswelle 2 ist mit der Antriebswelle 3 mittels der Wellenkupplung 7 verbunden, in der Fig. 1 nur schematisch, in der weiteren Fig. 2 ist sie konstruktionsmäßig dargestellt. Sie ermöglicht dem Zentralrad 13, das auf der Antriebswelle 3 befestigt ist, eine freie Lagerung des Zentralrads 13, ohne Lager, was mittels der Lagerung zwischen drei einfachen Satelliten 14, 15, 16 erreicht wird. Dadurch wird die gleichmäßige Verteilung der Belastung auf die einzelne Satelliten 14, 15, 16 erreicht.

Als Wellenkupplung 7 ist beispielsweise eine Zahnkupplung und/oder eine Klauenkupplung verwendbar. Dabei sind die Zähne oder Klauen entsprechend ballig ausführbar, um möglichst gut Kräfte abzuleiten oder auszugleichen.

Weiterer Teil des Ausgleichsmechanismus 11 ist die Lagerung der Welle 21 der Satellitenschelle 20, der Welle 24 des Kronenrads 23 und der Wellen 32, 33 der Zahnradvorgelegen 30, 31 und der Ausgangswelle 6, und zwar in der Wälzlagerung mit axialen Bewegungsfreiheit. Dies kann mittels z. B. der zweireihigen Kipptonnenlager mit axialem Spiel, die in der Fig. 1 nicht dargestellt sind, durchgeführt werden.

Aufgrund der erhöhten Beweglichkeit der freien Lagerung des Zentralrads 13 und der ganzen Baugruppe wird weiter die Möglichkeit der zuverlässigen, eindeutigen Bestimmung der Kräfte in den einzelnen Eingriffen der Zahnräder erreicht, was aufgrund der Berechnungsmethode gemäß der Theorie der Bindungsabhängigkeit für die Raumkombinationen nachgewiesen werden kann.

Die Konzeption der Differentialgetriebeeinrichtung in der Fig. 1 basiert auf der koaxialen Ausführung der angetriebenen Eingangswelle 2 des Motors M₂, und der Eingangswelle 5 des Zusatzantriebs 4 mit dem Motor M₃.

Bei dem Antriebsmotor M₂ und dem Antriebsmotor M₃ des Zusatzantriebs 4 sind die Umdrehungen und die Eingangsleistung stufenlos veränderbar und dadurch werden stufenlose Änderung der Umdrehungen und der Leistung, die mittels angetriebener Ausgangswelle 6 bei stufenlos veränderbarer Übersetzung abgeführt wird, erreicht. Die Ausgangswelle 6 kann zur Anschließung einer angetriebenen Maschine an einer oder anderer Ausgangsseite oder zwei gleichzeitig angetriebenen Maschinen, und zwar auf beiden Seiten des Getriebes 1, benutzt werden.

Aufgrund der Wahl der Anzahl von Zahnradvorgelegen 30, 31 mit befestigten Getriebestufen 8 der Stirnzahnräder mit einfacher Winkelverzahnung, also Schrägverzahnung, und ihrer Anordnung in der Grundrissfläche wird höhere Übersetzung und die erforderliche Entfernung von der Eingangswelle 2 mit Motor M₂, eventuell von der Koaxialwelle 5 des Zusatzantriebs 4 mit dem Motor M₃ von der Ausgangswelle 6 mit der angetriebenen Maschine erreicht, mit Beibehaltung der Möglichkeit der Formgestaltung des Getriebes 1 in eine größere Breite.

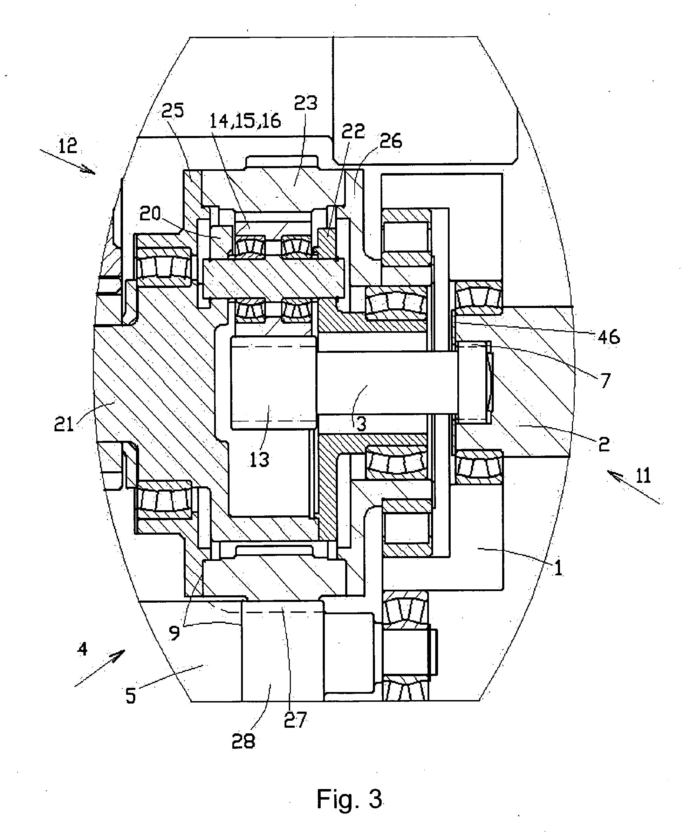

Die Fig. 2 zeigt den Entwurf der Differentialgetriebeeinrichtung mit dem Ausgleichsmechanismus 11 und mit dem Planetenräderwerk 12 mit einfachen Satelliten 14, 15, 16 in einem Getriebezweig 38 und ist durch die Fig. 3 mit dem Ausschnitt des detaillierten Konstruktionsentwurfs des Planetenräderwerks ergänzt.

In der Beschreibung der Fig. 2, bzw. Fig. 3 sind im Weiteren nur die Abweichungen der Ausführung gegenüber der Konzeption in Fig. 1 erwähnt.

Das Planetenräderwerk 12 in Fig. 2 und Fig. 3 ist mit dem rotierenden Antriebszentralrad 13, mit dem Zusatzantrieb 4 von dem Kronenrad 23 und angetriebenen Satellitenschelle 20 konzipiert.

Weiter ist die Konstruktionsbaugruppe des Antriebs von der Seite der Eingangswelle 2 des Motors M₂ gezeigt, der mittels Wellenkopplung 7 an die Antriebswelle 3 mit dem Zentralzahnrad 13 aus einem Stück angeschlossen ist.

Die Fig. 2 zeigt die Projektlösung, die Fig. 3 die Konstruktionslösung des Zusatzantriebs 4 beim Kronenrad 23 mit Hilfe der Eingangswelle 5 des Zusatzantriebs 4 mit Treibrad 28 im Eingriff mit der Außenverzahnung 27 auf dem äußerem Umfang des Kronenrads 23.

Das Treibrad 28 zusammen mit der eingreifenden Außenverzahnung 27 des Kronenrads 23 bilden die Vorstufe 9, die in Fig. 2 nicht nur die Erhöhung der Übersetzung ermöglicht, sondern auch die Vergrößerung der Entfernung der Eingangswelle 5 des Zusatzantriebs 4 von der Ausgangswelle 6 mit zwei Wellenenden. Das Antriebsrad 29 ist jetzt auf der Antriebswelle 21 der Satellitenschelle 20 befestigt.

Die Konzeption des Ausgleichsmechanismus 11 der Differentialgetriebeeinrichtung ist in der Fig. 3 als Konstruktionsausführung der freien Lagerung des Zentralrads 13 mit Antriebswelle 3, ohne Lager, zwischen drei Satelliten 14, 15, 16 gezeichnet. Die Antriebswelle 3 ist axial an die bombierte Stirnfläche der Eingangswelle 2 gestützt und zugleich axial durch den an die Eingangswelle 2 frontal angeschraubten Stützring 46 gesichert, siehe Fig. 3. Die Bestandteile des Ausgleichsmechanismus 11 bilden weiter sämtliche Wälzlagerungen der Wellen mit zweireihigen Kipptonnenlagern.

Aus der Teilkonstruktionsgestaltung in der Fig. 3 ist die Wellenkopplung 7 der Eingangswelle 2 mit der Antriebswelle 3, die als Kupplungsverzahnung konstruiert ist, gut ersichtlich. In der Abb. 2b ist die Ausgestaltung der Satellitenschelle 20 gemeinsam mit der Welle 21 der Satellitenschelle 20 aus einem Stück und weiter der geteilten Satellitenschelle 20 mit dem angeschraubten und mittels der Stiften gesicherten Flansch 22 sichtbar.
Das Kronenrad 23 ist konstruiert als geteiltes Rad, seine Stirnflächen 25, 26 sind darauf seitlich angeschraubt und mittels der Stifte gesichert. Der Stirn 25 ist rotierend auf der Welle der Satellitenschelle 21 gelagert und zweiter Stirn 26 ist auf dem Flansch 22 der Satellitenschelle 20 gelagert. Die Lagerung ist mittels zweireihiger Kipptonnenlager durchgeführt.

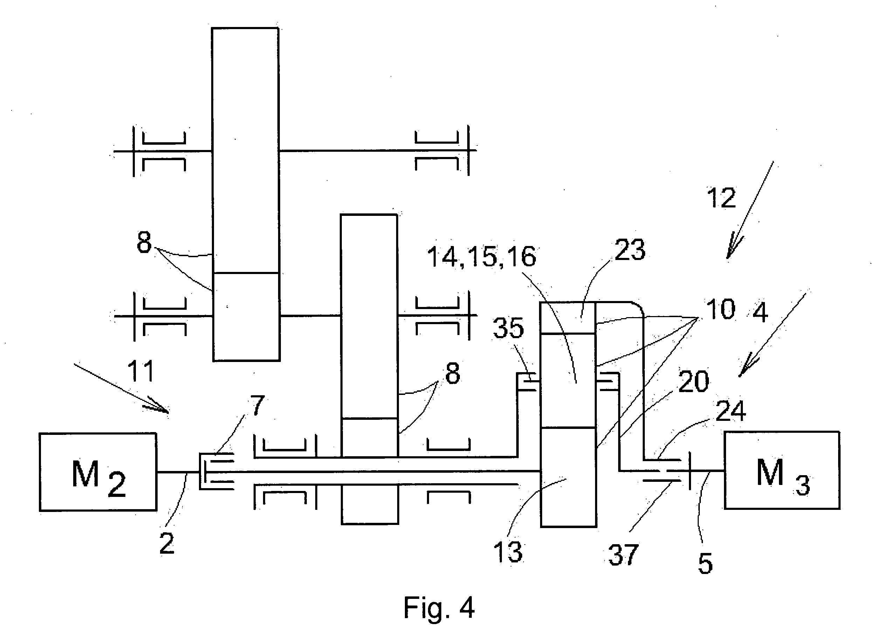

Die Fig. 4 ist das kinematische Schema der Differentialgetriebeeinrichtung mit dem Ausgleichsmechanismus 11 mit dem Planetenräderwerk 12 mit den einfachen Satelliten 14, 15, 16, wo die Antriebsteile das Zentralrad 13 und das Kronenrad 23 sind und der angetriebene Teil die Satellitenschelle 20 ist, mit den weiter angeführten Änderungen im Gegenteil zur Fig. 1 bzw. Fig. 2.

In der Fig. 4 ist das Spiegelbild der Anordnung von Motoren M₂, M₃ im Gegenteil zu Fig. 2. Die Fig. 4 präsentiert die Lösung für die verlangte niedrigere Übersetzung. Deshalb ist die Differentialgetriebeeinrichtung mit einer Planetenstufe 10 und nur zwei Planetenstufen 8 aus den Stirnzahnrädern ausgebildet.

Eine markante Änderung stellt die Ausführung des Zusatzantriebs 4 dar, der als direkter Antrieb des Kronenrads 23 mittels Welle 5 des Zusatzantriebs 4 konzipiert ist, der an die Rohrverlängerung der Welle 24 des Kronenrads 23 mittels Kupplung 37 angeschlossen ist. Die Ausführung der einfachen Satelliten 14, 15, 16 auf der Satellitenschelle 20 ist geändert worden, wie die Fig. 4 zeigt, in die Wellenlagerung 35 der einfachen Satelliten 14, 15, 16 auf der Satellitenschelle 20 mit der Rotationsbeweglichkeit.

Die Lösung des kinematischen Schemas in der Fig. 4 führt zur koaxialen Anordnung der Eingangswelle 2 des Motors M₂ und der Welle 5 des Zusatzantriebs 4. Bei der Ausgestaltung des Getriebes U 1 wird die Breite nicht mehr so deutlich über seine Länge vorwiegen.

Im Falle der Anforderung einer höheren Übersetzung ist es möglich, im Gegenteil zur Ausführung in Fig. 4, eine Vorstufe 9 bzw. eine oder mehrere Getriebestufen 8 anzuschließen.

Fig. 5 stellt das kinematische Schema der Differentialgetriebeeinrichtung mit dem Ausgleichsmechanismus 11 und dem Planetenräderwerk 12 dar.

In der Beschreibung der Fig. 5 sind die Abweichungen der Ausführung im Gegenteil zur Konzeption in Fig. 1 angeführt.

Das Planetenräderwerk ist durchgeführt mittels zwei Planetenstufen 10 in der Ausführung als Planetenräderwerk 12 genannt mit doppelten Satelliten 17, 18, 19 und in der Kombination epi - hypo. Diese doppelten Satelliten 17, 18, 19 sind durch die Stirnzahnräder mit größerem und kleinerem Durchmesser gebildet, von denen das erste größere Rad im Eingriff mit dem Zentralrad 13 mit der Außenverzahnung ist und das zweite kleinere Rad im Eingriff mit dem zweiten Zentralrad 34 in der Form eines Kronenrads 23 mit Innenverzahnung ist.

Die Antriebsteile des Planetenräderwerks 12 mit doppelten Satelliten 17, 18, 19 sind das Zentralrad 13 und die Satellitenschelle 20, den angetriebenen Teil bildet das Kronenrad 23. Bei der rotierenden Satellitenschelle 20 sind dann durch den ersten Eingriff der Zahnräder mit der Außenverzahnung der doppelten Satelliten 17, 18, 19 die kinematisch-geometrische Bedingungen für die Erfüllung des sog. epizykloidischen Formgesetzes gegeben. Durch den zweiten Eingriff der Zahnräder mit der Außen- und Innenverzahnung sind die Bedingungen des hypozykloidischen Formgesetzes erfüllt. Deshalb wird die abgekürzte Bezeichnung epi - hypo benutzt.

Der Ausgleichsmechanismus ist wieder durch die freie Lagerung des Zentralrads 13 zwischen drei doppelten Satelliten 17, 18, 19 und weiter bei allen Rotationslagerungen durch die verwendeten zweireihigen Kipptonnenlager, die nur mit ihrem axialen Betriebsspiel dargestellt sind, gebildet.

In der Fig. 5 ist gezeigt, wie die längere Kopplung der Eingangswelle 2 mit der Antriebswelle 3 mit dem Zentralrad 13, die ohne Leitung durch das Antriebsrad 29 geht, für die Konstruktionsausarbeitung der freien Lagerung des Zentralrads 13 zwischen Satelliten 17, 18, 19, ausgenutzt ist. Diese Platzierung des Antriebsrads 29 führt zu der abnormalen Konstruktionsformung der Anbindung des Kronenrads 23 an die Welle 24 des Kronenrads. Aufgrund der Platzierung von nur einer Zahnradvorgelege 30 und der angetriebenen Welle 6 in der Fig. 5 ist es möglich, das Getriebe 1 eher in die längliche Achsenverlängerung zu formen.
Mittels der Anschließung z. B. weiterer zwei Getriebestufen 8 auf den Zahnradvorgelegen 30, 31 erhalten wir sechsstufige Differentialgetriebeeinrichtung mit dem Getriebe 1, das flächenmäßig in die Breite geformt ist.

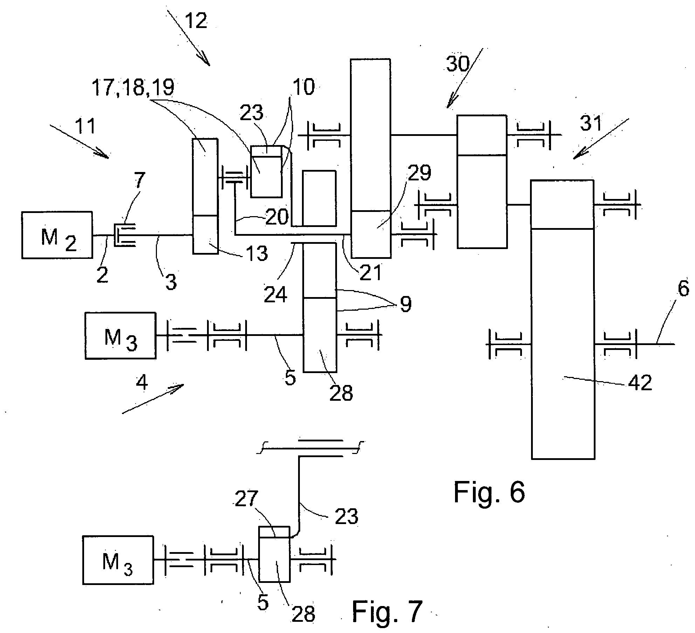

In der Fig. 6 ist die Lösung des Differentialgetriebeeinrichtung mit dem Ausgleichsmechanismus 11 in der sechsstufigen Ausführung gezeigt, in der Fig. 7 ist sie durch die alternative Ausführung des Zusatzantriebs 4 ergänzt. Das Planetenräderwerk 12 mit den doppelten Satelliten 17, 18, 19 hat die Ausführung epi - hypo. Näheres siehe die Beschreibung zur Abb. 4.

Weiter sind bestimmte Abweichungen von der Fig. 1 und 5 angeführt. Die Antriebsteile des Planetenräderwerks 12 sind das Zentralrad 13 mit der Antriebswelle 3 und das Kronenrad 23 der zweiten Planetenstufe 10, das einen Teil des Zusatzantriebs 4 bildet. Der Zusatzantrieb 4 kann so konzipiert sein, wie es in der Fig. 6 gezeigt ist, mit Hilfe der Antriebswelle 5 mit dem Motor M₃ mit dem Treibrad 28, das mit dem angeschlossenen Zahnrad auf der Welle 24 des Kronenrads 23 im Eingriff ist. Das Treibrad 28 bildet zusammen mit dem angeschlossenen Zahnrad auf der Welle 24 des Kronenrads 23 die Vorstufe 9.

In der alternativen detaillierten Fig. 7 ist die analogische Ausführung zu Fig. 2, 3 mit der Eingangswelle 5 des Zusatzantriebs 4 mit dem Treibrad 28 dargestellt, das mit der Außenverzahnung 27 hergestellten auf dem Außenumfang des Kronenrads 23, im Eingriff ist. Das Treibrad 28 bildet gemeinsam mit der Außenverzahnung 27 des Kronenrads 23 die Vorstufe 9. Mit Rücksicht auf die Platzierung des Antriebmotors M₂ und des Motors M₃ des Zusatzantriebs 4 auf der gleichen Seite des Getriebes 1 kann die Vorstufe 9 für die Vergrößerung ihrer gegenseitigen Entfernung genutzt werden.

Der angetriebene Teil des Planetenräderwerks 12 ist die Satellitenschelle 20 in Verbindung mit der Welle 21 der Satellitenschelle 20, auf der das Antriebsrad 29 befestigt ist. Die angeschlossenen Zahnradvorgelege 30, 31 sind hier verwendet, um die benötigte hohe Übersetzung zu erreichen. In der Fig. 6 sind insgesamt sechs Getriebestufen gezeigt. Ihre Anordnung in der Fläche in der Fig. 6 wurde genutzt für das Erreichen der länglichen Achsenverlängerung der Form des Getriebes 1 der Differentialgetriebeeinrichtung. In dieser Ausführung wurde der wichtige Ausgleichsmechanismus 11 wieder benutzt, wie oben zur Fig. 1, 2, 3 näher beschrieben.

Die Fig. 8 zeigt in ihrer kinematischen Darstellung der Differentialgetriebeeinrichtung mit dem Ausgleichsmechanismus 11 die Konzeption mit dem Planetenräderwerk 12 mit den doppelten Satelliten 17, 18, 19, und zwar in der Ausführung epi - epi.

In der weiteren Beschreibung sind die Referenzen und Abweichungen im Bezug auf die Fig. 6 angeführt.

Drei doppelte Satelliten 17, 18, 19 sind in Eingriff mit dem Zentralrad 13 und mit dem zweiten Zentralrad 34, wobei die beiden eine Außenverzahnung haben, also die Ausführung epi - epi, näheres siehe Fig. 5. Der Antriebsteil des Planetenräderwerks 12 ist das Zentralrad 13 und die Satellitenschelle 20, der angetriebene Teil ist das zweite Zentralrad 34. Auf der Welle 5 des Zusatzantriebs 4 und auf der Welle 21 der Satellitenschelle 20 ist die Vorstufe 9 platziert, die aus der Getriebestufe 8 besteht, die die Übertragung erhöht und zugleich die Achsenentfernung zwischen der Welle 5 des Zusatzantriebs 4 mit dem Motor M₃ und der Ausgangswelle 6 vergrößert.

Die Differentialgetriebeeinrichtung ist mit den Stirnzahnrädern mit nur Außenverzahnung, also ohne Innenverzahnung, die in der Herstellung anspruchsvoller ist, bestückt.
Der Ausgleichsmechanismus 11 ist im Einklang mit der Beschreibung in der Fig. 1 und der Fig. 2, 3 gebildet.
An das zweite Zentralrad 34 des Planetenräderwerks 12 ist das Antriebsrad 29 befestigt und als Gesamteinheit ist sie rotierend mittels Lager auf der Welle 21 der Satellitenschelle 20 gelagert. Die Flächenplatzierung der Wellen 32, 33 der Zahnradvorgelegen 30, 31 mit den Getriebestufen 8 in der Fig. 8 führt zum Formgestaltung des Getriebes 1 in die Breite mit der Ausnutzugsmöglichkeit, die schon in der Beschreibung in der Fig. 1 angeführt wurde.

Die Fig. 9 stellt die Differentialgetriebeeinrichtung mit dem Ausgleichsmechanismus 11 dar, wo das Planetenräderwerk 12 mit den doppelten Satelliten 17, 18, 19 in der Ausführung epi - epi mit dem Antriebszentralrad 13 und dem Zusatzantrieb 4, der als direkter Antrieb vom Motor M₃ an das zweite Zentralrad 34 ausgeführt ist, konzipiert ist. Der angetriebene Teil des Planetenräderwerks 12 ist die Satellitenschelle 20. In der schematischen Darstellung ist die Lösungsvariante der Lagerung der Wellen 36 der doppelten Satelliten 17, 18, 19 auf der Satellitenschelle 20 gezeigt, wie schon bei der Fig. 4 beschrieben.
Diese vierstufige Ausführung ist nur mittels Zahnräder mit Außenverzahnung erreicht, und zwar mit ihrer minimalen Anzahl. Von dem Standpunkt der Getriebestufen 8
mit der Zahnradvorgelege 30 und Ausgangswelle 6 mit dem letzten angetriebenen Rad 42 kommt die Formgestaltung des Getriebes 1 in der Langform zur Geltung.

In der Fig. 10 ist die Differentialgetriebeeinrichtung mit dem Ausgleichsmechanismus 11 mit zwei Getriebezweigen 38, 39, die in der Projektausführung angeordnet sind, ausgebildet. Der Ausgleichsmechanismus 11 ist analog zu dem in den Fig. 2, 3, wo auch die Beschreibung angeführt ist.

Die Grundkomponente bleibt das Planetenräderwerk 12 mit den einfachen Satelliten 14, 15, 16 mit dem Antriebszentralrad 13 und dem Antriebskronenrad 23 mit der Welle 5 des Zusatzantriebs 4 mit dem Treibrad 28, das im Eingriff mit der Außenverzahnung 27 des Kronenrads 23 ist, und dadurch sie die Vorstufe 9 bildet, wie es schon in der Fig. 2 und Fig. 3 angewendet wurde. Der angetriebene Teil ist die Satellitenschelle 20, wobei auf die Welle 21 der Satellitenschelle 20 das Antriebsrad 29 befestigt ist. Dieses ist in gleichzeitigem permanentem Eingriff in der horizontalen Ebene mit zwei Zwischenzahnrädern 40, rotierend gelagert auf den Zahnradvorgelegen 49, die zusammen mit dem Antriebsrad 29 die Getriebegabelungsstufe 57 für zwei Getriebezweige 38, 39 bilden.

In der Fig. 10 steht in dem ersten Getriebezweig 38 das Zwischenzahnrad 40, fest gelagert auf der Welle 53 der Zahnradvorgelege 49, mit dem letzten angetriebenen Zahnrad 42 der Ausgangswelle 44 in Eingriff und in dem zweiten Getriebezweig 39 steht das weitere Zwischenzahnrad 40, vorteilhaft rotierend gelagert auf der Welle 5 des Zusatzantriebs 4, mit dem Zwischenzahnrad 41 in Eingriff, fest gelagert auf der Welle 54 der Zahnradvorgelege 49, das im Eingriff mit dem letzten angetriebenen Rad 43 steht, das auf der Ausgangswelle gelagert ist 45, abgebildet.

Es wurde eine wesentliche Vergrößerung der Entfernung zwischen den beiden angetriebenen Ausgangswellen 44, 45 des Getriebes 1 erreicht. Aufgrund dieser Anordnung wurde die verlangte Übersetzung in einem und zweitem Getriebezweig mit identischen Werten erreicht.

Bei den stufenlos veränderbaren Umdrehungen und Eingangsleistung der Antriebsmotoren M₂, M₃ wird die stufenlose Änderung der Umdrehungen und der Leistung an den Ausgangswellen 44, 45 der Getriebezweigen 38, 39 bei den stufenlos veränderbaren Übersetzungen erreicht.

Die Ausgangswellen 44, 45 können mit einem oder zwei Wellenenden konzipiert werden, was das Anschließen von zwei angetriebenen Maschinen an einem Ende einer Welle 44, 45 auf einer oder anderer Seite des Getriebes 1 ermöglicht.

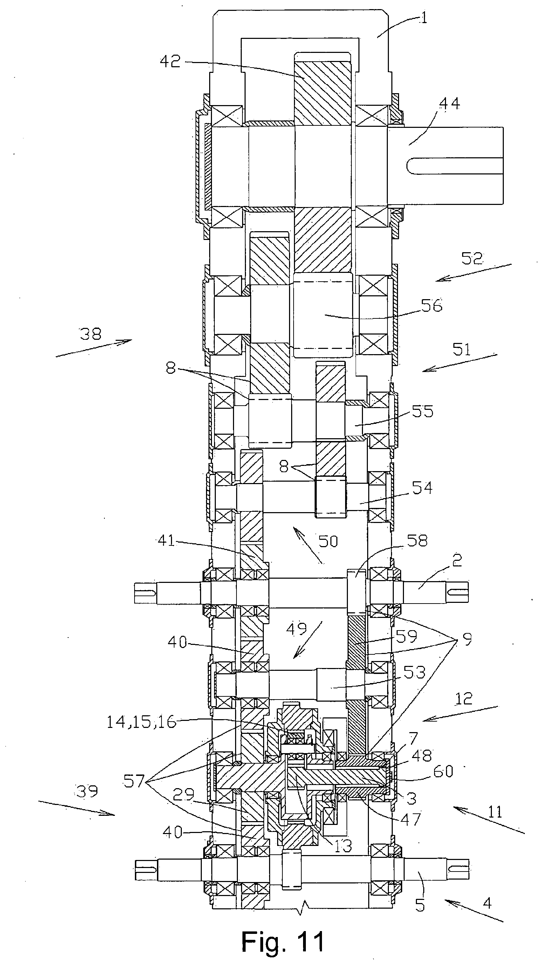

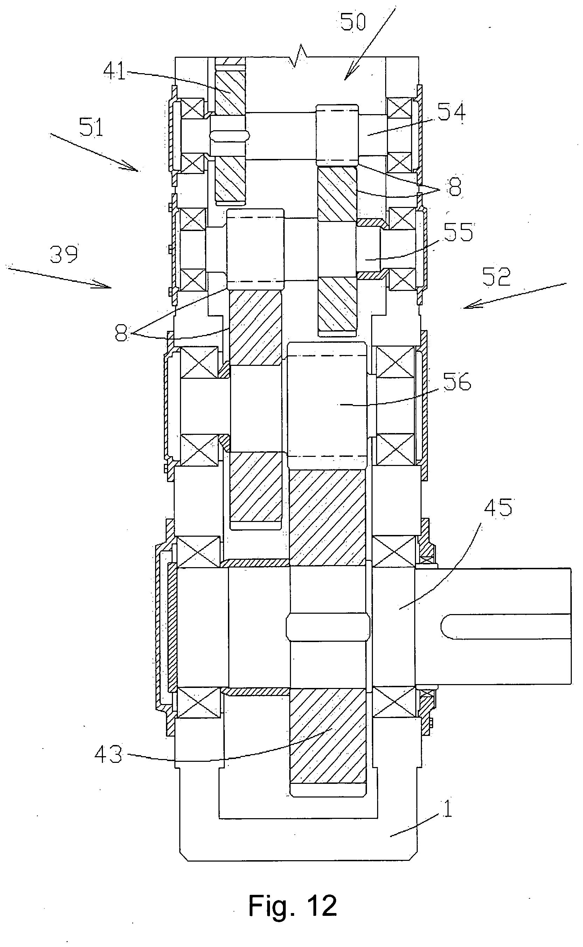

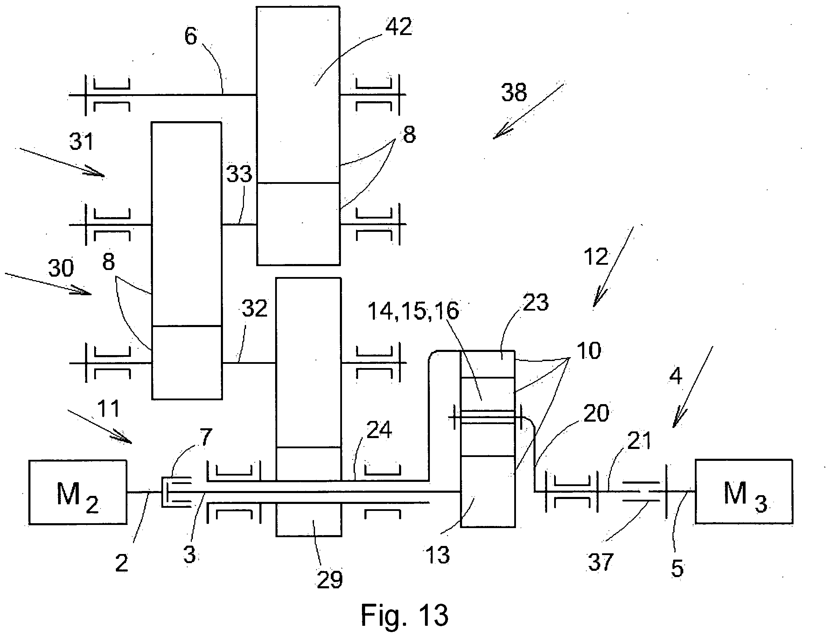

In Fig. 11 und 12 ist die Projektausführung der Differentialgetriebeeinrichtung mit dem Ausgleichsmechanismus 11 mit zwei Getriebezweigen 38, 39, mit bestimmten Modifikationen im Gegensatz zu der Fig. 10, angeführt.

Die Fig. 11 stellt einen Teil der Grundrissansicht der Differentialgetriebeeinrichtung mit dem Planetenräderwerk 12 mit dem Getriebezweig 38 dar und die Fig. 12 stellt den restlichen Teil mit dem zweiten Getriebezweig 39 dar.

Vorteil bei Ausführung nach Fig. 11 besteht darin, dass eine deutliche Vergrößerung der Entfernung zwischen den beiden Ausgangswellen 44, 45 erreicht wird.

Bei dem Antrieb des Zentralrads ist die Vorstufe 9 genutzt, die aus dem Eingangsrad 58, das auf der durchlaufend gelagerten Eingangswelle 2 des Motors M₂ befestigt ist, des Einbaurads 59, das auf der Zahnradvorgelege 49 des Getriebezweigs 38 fest gelagert ist, und aus dem Zwischenrad 47, das mit der inneren Kupplungsverzahnung ausgestattet ist, zusammengesetzt ist.

Der Ausgleichsmechanismus 11 besteht aus der freien Lagerung des Zentralrads 13, ohne Lager, zwischen drei Satelliten 14, 15, 16, das auf der Antriebswelle 3 befestigt ist, die mittels Wellenkopplung 7, ausgeführt durch die Kupplungsverzahnung mit dem Zwischenrad 47, gekoppelt ist. Die Antriebswelle 3 ist axial an die frontal angeschraubte Lasche 48 an das Zwischenrad 47 gestützt und axial mittels Achsensicherungsschraube 60 der Lasche 48 gesichert.

Weitere Ausführung des Planetenräderwerks 12 mit der Welle 5 des Zusatzantriebs 4 ist analog zur Ausführung nach Fig. 10.

Die Getriebegabelungsstufe 57 ist durch das Antriebsrad 29 gebildet, mit gleichzeitigen Eingriffen beider Zwischenzahnräder 40, rotierend gelagert, mit einem Zwischenzahnrad 40 auf der Zahnradvorgelege 49 des ersten Getriebezweigs 38 und zweitem Zwischenzahnrad 40 auf der Welle 5 des Zusatzantriebs 4 in dem zweiten Getriebezweig 39. Zweckmäßig ist auch die Rotationslagerung des Zwischenzahnrads 41 auf der Eingangswelle 2 in dem Getriebezweig 38 gelöst. Weiter sind die Zahnradvorgelegen 50, 51, 52 mit den Getriebestufen 8 in beiden Getriebezweigen 38 und 39 angeschlossen.

Die letzten angetriebenen Räder 42, 43 sind wieder auf den Ausgangswellen 44, 45 in den Getriebezweigen 38, 39 fest angesetzt. Einen Teil des Ausgleichsmechanismus 11 bildet auch die Eingangswelle 2, Wellen 53, 54, 55, 56 der Zahnradvorgelegen 49, 50, 51, 52 und die Ausgangswellen 44, 45.

Mit dieser Anordnung ist eine hohe stufenlos veränderbare Übersetzung mit identischen Werten in den Getriebezweigen 38, 39 bei den stufenlosen Änderungen der Umdrehungen und der Leistung an dem Eingang und dem Ausgang der Differentialgetriebeeinrichtung erreicht.

Die Aufstellung in der Fig. 11, 12 beweist das Erreichen einer deutlichen Entfernung der Ausgangswellen 44, 45 der Getriebezweigen 38, 39.

Die Ausgangswelle 2 des Motors M₂ und die Welle 5 des Zusatzantriebs 4 des Motors M₃ und die Ausgangswellen 44, 45 können mit beiderseitigen Wellenenden ausgearbeitet werden. Dies kann für das erforderliche Anschließen von Antriebsmotoren M₂, M₃ und die Platzierung der gleichzeitig angeschlossenen angetriebenen Maschinen auf einer oder anderer Seite des Getriebes 1, und zwar in verschiedenen Varianten ihrer Stellung, vorteilhaft ausgenutzt werden.

Die Differentialgetriebeeinrichtung mit dem Ausgleichsmechanismus mit dem eingebauten Planetenräderwerk mit ihrer Ausnutzung im Bereich der industriellen Getriebeeinrichtungen mit den Zahnrädern ist dadurch spezifisch, dass sie eine große Leistungsbelastung bei der stufenlos veränderbaren Ein- und Ausgangsparametern der Umdrehungen und der Leistung ermöglicht.

Diese Differentialgetriebeeinrichtungen können in den Antrieben der Maschinenaggregate des schweren Maschinenbaus, der Hüttenindustrie und bei Abstichkonvertern, für Hebevorrichtungen bei großen Kränen und/oder Aufzügen und dergleichen, benutzt werden. Insbesondere ist auch eine Erhöhung der Sicherheit erreichbar.

Zusammenfassend wird nochmals der Kernpunkt der Idee bei dem erfindungsgemäßen Differentialgetriebeeinrichtung mit Ausgleichsmechanismus beschrieben:
Die Differentialgetriebeeinrichtung mit dem Ausgleichsmechanismus besteht mindestens aus drei Getriebestufen (8), von denen eine oder zwei Planetenstufen (10) sind. Der Antriebsteil des Planetenräderwerks (12) ist das Zentralrad (13). Bei dem Planetenräderwerk (12) mit den einfachen Satelliten (14, 15, 16) bildet den zweiten Teil des Zusatzantriebs (4) die Satellitenschelle (20) oder das Kronenrad (23), bei dem Planetenräderwerk mit den doppelten Satelliten (17, 18, 19) ist es die Satellitenschelle (20) oder das Kronenrad (23), eventuell die Satellitenschelle (20) oder das zweite Zentralrad (34).

Jede nachfolgende Getriebestufe (8), in einer oder zwei Getriebezweigen (38, 39), ist durch den Eingriff der Stirnzahnräder mit dem Antriebsrad (29), befestigt auf der Welle (24) des Kronenrads (23) oder der Satellitenschelle (20), ausgebildet.

Vor einem der Antriebsteile des Planetenräderwerks (12) kann die frontale Vorstufe (9) angeschlossen werden.

Der Ausgleichsmechanismus (11) ist vor allem aus der freien Lagerung des Zentralrads (13), ohne Lager, zwischen drei Satelliten (14, 15, 16) oder (17, 18, 19), befestigt auf der Antriebswelle (3), die mittels der Kupplungsverzahnung (7) mit der Eingangswelle (2) verbunden ist, ausgebildet.

An den beiden Antriebsmotoren (M₂, M₃) sind stufenlos veränderbare Umdrehungen und Eingangsleistung möglich, an der angetriebenen Ausgangswelle (6) wird eine stufenlose Änderung der Umdrehungen und der Leistung bei veränderbaren Übersetzung erreicht.

Dadurch wird die gleichmäßige Gabelung der Leistung an die einzelnen Satelliten erreicht (14, 15, 16), (17, 18, 19).

### Bezugsbezeichnungen:

- 1: Getriebe
- 2: Eingangswelle
- 3: Antriebswelle
- M₂: Motor (der Eingangswelle 2)
- M₃: Motor (des Zusatzantriebes 4)
- 4: Zusatzantrieb
- 5: Welle (des Zusatzantriebes 4)
- 6, 44, 45: Ausgangswelle
- 7: Wellenkopplung
- 8: Getriebestufe
- 9: Vorstufe
- 10: Planetenstufe
- 11: Ausgleichsmechanismus
- 12: Planetenräderwerk
- 13: Zentralrad
- 14, 15, 16: (einfache) Satelliten
- 17, 18, 19: (doppelte) Satelliten
- 20: Satellitenschelle
- 21: Welle (der Satellitenschelle 20)
- 22: Flansch
- 23: Kronenrad
- 24: Welle (des Kronenrads 23)
- 25, 26: Stirnflächen
- 27: Außenverzahnung (des Kronenrads 23)
- 28: Treibrad
- 29: Antriebsrad
- 30, 31: Zahnradvorgelege
- 32, 33: Welle (der Zahnradvorgelege 30, 31)
- 34: zweites Kronenrad
- 35: Welle (der einfachen Satelliten 14, 15, 16)
- 36: Welle (der doppelten Satelliten 17, 18, 19)
- 37: Kupplung
- 38, 39: Getriebezweig
- 40, 41: Zwischenzahnrad
- 42, 43: (letztes) getriebenes Rad
- 46: Stützring
- 47: Zwischenrad
- 48: Lasche
- 49, 50, 51, 52: Zahnradvorgelegen (zweier Getriebezweige 38, 39)
- 53, 54, 55, 56: Welle (der Zahnradvorgelege 49, 50, 51, 52)
- 57: Gabelungsstufe
- 58: Eingangsrad
- 59: Einbaurad
- 60: Sicherungsschraube

## Patentansprüche

1. Getriebe, umfassend eine Überlagerungsgetriebeeinrichtung, insbesondere Differentialgetriebeeinrichtung,
wobei über zwei antreibende Wellen (3, 21) des Getriebes Drehmomentflüsse mittels der Überlagerungsgetriebeeinrichtung zusammenführbar sind,
wobei eine erste (3) der antreibenden Wellen (3, 21) ein Zentralrad (13), insbesondere ein Sonnenrad (13), eines Planetenräderwerks (12) antreibt,
wobei die erste antreibende Welle (3) frei gelagert ist, indem sie
- in einem ersten axialen Bereich an Umlaufrädern (14, 15, 16) der Überlagerungsgetriebeeinrichtung gelagert ist
- und in einem zweiten axialen Bereich über eine Wellenkupplung (7) an einer Abtriebswelle (2) einer antreibenden Vorrichtung (11), insbesondere an einer Abtriebswelle (2) eines Motors (M2), insbesondere eines Elektromotors, gelagert ist,
**dadurch gekennzeichnet, dass**
das Getriebe einen Ausgleichsmechanismus aufweist,
wobei die Wellenkopplung (7) mit axialer Sicherung durch eine Kupplungsverzahnung oder eine Falzverbindung ausgebildet ist,
wobei die erste antreibende Welle (3) axial an eine bombierte Stirnfläche der Abtriebswelle (2) der antreibenden Vorrichtung (11) gestützt ist, und gleichzeitig axial mittels eines an die Abtriebswelle (2) der antreibenden Vorrichtung (11) angeschraubten Stützrings (46) gesichert ist, oder
wobei die erste antreibende Welle (3) axial mittels einer frontal angeschraubten Lasche (48) an ein Zwischenrad (47) gestützt ist und axial mittels einer Achsensicherungsschraube (60) der Lasche (48) gesichert ist,
und wobei ein Teil des Ausgleichsmechanismus Wälzlagerungen aufweist die mit zweireihigen Tonnenlagern mit durch Betriebsspiel der Lager gegebener axialer Beweglichkeit bestückt sind.

## Claims

1. Gearing comprising a superposition gearing device, in particular a differential gearing device,
torque flows being able to be merged by means of the superposition gearing device via two driving shafts (3, 21) of the gearing,
a first (3) of the driving shafts (3, 21) driving a central gear (13), in particular a sun gear (13), of a planetary gear train (12),
the first driving shaft (3) being mounted freely by being
- mounted in a first axial region on ring gears (14, 15, 16) of the superposition gearing device
- and mounted in a second axial region on an output shaft (2) of a driving apparatus (11), in particular on an output shaft (2) of a motor (M2), in particular an electric motor, by means of a shaft coupling (7),
**characterised in that**
the gearing has a compensation mechanism,
the shaft coupling (7) being formed having axial securing by means of coupling teeth or a folded seam connection,
the first driving shaft (3) being axially supported against a cambered end face of the output shaft (2) of the driving apparatus (11), and simultaneously being secured axially by means of a support ring (46) screwed onto the output shaft (2) of the driving apparatus (11), or
the first driving shaft (3) being axially supported against an idler gear (47) by means of a fishplate (48) screwed on frontally, and being axially secured by means of an axial-securing screw (60) of the fishplate (48),
and one part of the compensation mechanism having anti-friction bearings, which are equipped with two rows of barrel roller bearings having axial mobility provided by an operational play between the bearings.

## Revendications

1. Transmission, comprenant un système de transmission à superposition, en particulier un système de transmission différentielle,
dans laquelle des flux de couple peuvent être réunis au moyen du système de transmission à superposition par l'intermédiaire de deux arbres menants (3, 21) de la transmission,
dans laquelle un premier (3) des arbres menants (3, 21) entraîne une roue centrale (13), en particulier une roue solaire (13), d'un train épicycloïdal (12),
dans laquelle le premier arbre menant (3) est monté librement
- en étant monté dans une première zone axiale sur des roues planétaires (14, 15, 16) du système de transmission à superposition et
- en étant monté dans une deuxième zone axiale par l'intermédiaire d'un accouplement d'arbre (7) sur un arbre de sortie (2) d'un dispositif menant (11), en particulier sur un arbre de sortie (2) d'un moteur (M2), en particulier d'un moteur électrique,
**caractérisée en ce que**
la transmission présente un mécanisme de compensation,
l'accouplement d'arbre (7) étant réalisé avec une fixation axiale par une denture d'accouplement ou un assemblage par agrafage,
le premier arbre menant (3) étant supporté axialement sur une face frontale bombée de l'arbre de sortie (2) du dispositif menant (11) et étant simultanément fixé axialement au moyen d'une bague d'appui (46) vissée sur l'arbre de sortie (2) du dispositif menant (11), ou
le premier arbre menant (3) étant supporté axialement au moyen d'une patte (48) vissée frontalement sur une roue intermédiaire (47) et étant fixé axialement au moyen d'une vis de fixation d'axe (60) de la patte (48),
et une partie du mécanisme de compensation présentant des roulements qui sont équipés de roulements à tonneaux sur deux rangées avec une mobilité axiale donnée par le jeu de fonctionnement des roulements.
